# FASCICULE DE BREVET EUROPEEN

(11) **EP 3 853 056 B1**
(45) Date de publication et mention de la délivrance du brevet: **10.07.2024**
(21) Numéro de dépôt: 19787041.3
(22) Date de dépôt: 13.09.2019
(51) Int. Cl.: B60K 11/04, B60K 11/06, F01P 5/02, F01P 7/10

(54) **DISPOSITIF DE VENTILATION POUR VEHICULE AUTOMOBILE**
BELÜFTUNGSVORRICHTUNG FÜR EIN KRAFTFAHRZEUG
VENTILATING DEVICE FOR A MOTOR VEHICLE

(30) Priorité: 17.09.2018 FR 1858370
(43) Date de publication de la demande: 28.07.2021
(73) Titulaire: Valeo Systemes Thermiques, 78320 Le Mesnil-Saint-Denis (FR)
(72) Inventeur: MAMMERI, Amrid, 78322 LE MESNIL SAINT DENIS CEDEX (FR); AZZOUZ, Kamel, 78322 LE MESNIL SAINT DENIS CEDEX (FR); LISSNER, Michael, 78322 LE MESNIL SAINT DENIS CEDEX (FR); GARNIER, Sébastien, 78322 LE MESNIL SAINT DENIS CEDEX (FR)
(74) Mandataire: Valeo Systèmes Thermiques
(86) Numéro de dépôt international: PCT/FR2019/052125
(87) Numéro de publication internationale: WO 2020/058608

(56) Documents cités:
- DE-A1- 102008 020 310
- DE-A1- 102009 002 998
- JP-A- H11 321 346
- JP-U- S6 165 236
- US-A1- 2018 100 425

## Description

L'invention a pour objet un dispositif de ventilation pour véhicule automobile.

L'invention se rapporte au domaine de l'automobile, et plus particulièrement au domaine de la circulation d'air pour le refroidissement du moteur et de ses équipements.

Les véhicules à moteur, qu'ils soient à combustion ou électriques, ont besoin d'évacuer les calories que génère leur fonctionnement et sont pour cela équipés d'échangeurs de chaleur. Un échangeur de chaleur de véhicule automobile comprend généralement des tubes, dans lesquels un fluide caloporteur est destiné à circuler, notamment un liquide tel que l'eau, et des éléments d'échange de chaleur reliés à ces tubes, souvent désignés par le terme « ailettes » ou « intercalaires ». Les ailettes permettent d'augmenter la surface d'échange entre les tubes et l'air ambiant.

Toutefois, afin d'augmenter encore l'échange de chaleur entre le fluide caloporteur et l'air ambiant, il est fréquent qu'un dispositif de ventilation soit utilisé en sus, pour générer ou accroitre un flux d'air dirigé vers les tubes et les ailettes.

De façon connue, un tel dispositif de ventilation comprend un ventilateur à hélice.

Le flux d'air généré par les pales d'un tel ventilateur est turbulent, notamment en raison de la géométrie circulaire de l'hélice, et n'atteint en général qu'une partie seulement de la surface de l'échangeur de chaleur (zone circulaire de l'échangeur faisant face à l'hélice du ventilateur). L'échange de chaleur ne se fait donc pas de façon homogène sur toute la surface des tubes et des ailettes.

En outre, lorsque la mise en marche du ventilateur ne s'avère pas nécessaire (typiquement lorsque l'échange de chaleur avec de l'air ambiant non accéléré suffit à refroidir le fluide caloporteur circulant dans l'échangeur), les pales obstruent en partie l'écoulement de l'air ambiant vers les tubes et les ailettes, ce qui gêne la circulation d'air vers l'échangeur et limite ainsi l'échange de chaleur avec le fluide caloporteur.

Un tel ventilateur est en outre relativement encombrant, à cause notamment des dimensions nécessaires de l'hélice pour obtenir un refroidissement moteur effectif, ce qui rend long et délicat son intégration dans un véhicule automobile.

Cette intégration est d'autant plus compliquée dans un véhicule électrique, dont la face avant laisse peu de place pour y loger les éléments de refroidissement du véhicule.

Le document JPH11321346 A décrit un dispositif de ventilation comportant deux ventilateurs tangentiels alignés l'un par rapport à l'autre. Toutefois, l'encombrement est important et ne permet pas d'adaptation simple dans le cas des voitures électriques.

Le but de l'invention est de remédier au moins partiellement à ces inconvénients.

A cet effet, l'invention a pour objet un dispositif de ventilation destiné à générer un flux d'air à travers au moins un échangeur de chaleur de véhicule automobile, comprenant au moins :
- un premier et un deuxième ventilateur tangentiel de mise en mouvement d'un flux d'air destiné à traverser l'au moins un échangeur de chaleur, les au moins deux ventilateurs étant agencés de sorte à être alignés l'un par rapport à l'autre dans le dispositif de ventilation le long de leur axe de rotation, et
- un premier moteur d'entrainement des premier et deuxième ventilateurs tangentiels, le premier moteur d'entrainement étant configuré pour être logé entre les premier et deuxième ventilateurs tangentiels.

Ainsi, le dispositif de ventilation selon la présente invention étant dépourvu d'hélice, il présente un encombrement réduit, ce qui assure une intégration simple dans tout véhicule automobile, y compris électrique.

En outre, le positionnement du moteur d'entrainement entre les ventilateurs tangentiels évite que le compartiment moteur ne dépasse du dispositif de ventilation, ce qui permet de gagner encore en compacité et protège le moteur d'impact extérieur, améliorant la fiabilité générale du dispositif de ventilation.

De surcroît, grâce au ventilateur tangentiel et au moyen de guidage, le dispositif de ventilation selon la présente invention garantit un refroidissement plus homogène et efficace de l'échangeur de chaleur ou des échangeurs de chaleur auxquels il est associé.

Selon un mode de réalisation de l'invention, le premier moteur d'entrainement est commun au deux ventilateurs tangentiels de sorte à entrainer simultanément le premier et le deuxième ventilateur tangentiel.

Selon un autre mode de réalisation de l'invention, le moteur d'entrainement, dit premier moteur d'entrainement, est accouplé avec le premier ventilateur tangentiel, et un deuxième moteur d'entrainement est accouplé avec le deuxième ventilateur tangentiel, le deuxième moteur d'entrainement (étant juxtaposé au premier moteur d'entrainement entre les premier et deuxième ventilateurs tangentiels.

Avantageusement, le dispositif de ventilation comprend en outre au moins un moyen de guidage comprenant au moins un élément de guidage de l'air conformé pour guider l'air mis en mouvement par la ventilateur tangentiel à travers l'échangeur de chaleur.

Avantageusement, les éléments de guidage d'air sont conformés pour délimiter au moins un passage d'air entre les premier et deuxième ventilateurs tangentiels et l'échangeur de chaleur et sont montés mobiles entre une position d'ouverture dudit au moins un passage d'air et une position d'obturation au moins partielle dudit au moins un passage d'air.

De surcroit, chaque élément de guidage d'air peut comprendre une surface de guidage d'air et un axe de pivotement de l'élément de guidage.

En outre, les axes de pivotement peuvent s'étendre parallèlement les uns aux autres, des projections de chaque axe de pivotement dans un plan orthogonal aux axes de pivotement étant appelées projection.

En complément, les projections peuvent être alignées dans ledit plan orthogonal aux axes de pivotement.

Selon un mode de réalisation avantageux, le dispositif de ventilation comprend en outre au moins un troisième et un quatrième ventilateur tangentiel agencés de sorte à être alignés l'un par rapport à l'autre dans le dispositif de ventilation le long de leur axe de rotation, et les premier et deuxième ventilateurs tangentiels se situent le long d'un côté du dispositif qui est opposé au côté le long duquel les troisième et quatrième ventilateurs tangentiels, les premier, deuxième, troisième et quatrième ventilateurs tangentiels s'étendant respectivement parallèlement aux éléments de guidage.

Un autre objet de l'invention concerne un module d'échange thermique, comprenant un dispositif de ventilation tel que décrit précédemment et au moins un premier échangeur de chaleur, le premier échangeur de chaleur et le dispositif de ventilation étant positionnés l'un relativement à l'autre de sorte qu'un flux d'air mis en mouvement par le dispositif de ventilation alimente l'échangeur de chaleur.

L'invention a également pour objet une calandre pour un véhicule automobile, munie d'une ouverture et d'un dispositif de ventilation tel que décrit précédemment et/ou un module d'échange thermique tel que décrit précédemment.

D'autres caractéristiques et avantages de l'invention apparaîtront à la lecture de la description qui va suivre. Celle-ci est purement illustrative et doit être lue en regard des dessins annexés sur lesquels :
- la figure 1 illustre une vue en perspective d'un module d'échange de chaleur équipé d'un dispositif de ventilation selon un premier mode de réalisation de la présente invention en position ouverte ;
- la figure 2 illustre une vue en perspective du module d'échange de chaleur de la figure 1 en position fermée ;
- la figure 3 illustre une vue en coupe longitudinale du module de la figure 1 ;
- la figure 4 illustre une vue en coupe longitudinale du module de la figure 2 ;
- la figure 5 illustre une vue en perspective d'une face avant de véhicule automobile équipé du module de la figure 1 ;
- la figure 6 illustre une vue en perspective d'une face avant de véhicule automobile équipé du module de la figure 2 ;
- la figure 7 illustre une vue de côté de la face avant de la figure 5 ;
- la figure 8 illustre une vue de dessus de la face avant de la figure 6 ;
- la figure 9 illustre une vue en perspective partielle du module de la figure 1 selon une variante de réalisation, un moyen de guidage n'étant pas représenté ;
- la figure 10 illustre une vue en coupe longitudinale du module de la figure 9 ;
- la figure 11 illustre une vue en perspective partielle d'un module d'échange de chaleur équipé d'un dispositif de ventilation selon un deuxième mode de réalisation de la présente invention en position ouverte ;
- la figure 12 illustre une vue en perspective partielle du module de la figure 11 en position fermée ;
- la figure 13 illustre une vue en perspective d'une face avant de véhicule automobile muni d'un module d'échange équipé d'un dispositif de ventilation selon un troisième mode de réalisation de la présente invention ; et
- la figure 14 illustre une vue de côté de la face avant de la figure 13.

### Dispositif de ventilation

L'invention a pour objet un dispositif de ventilation 1 pour véhicule automobile.

L'invention a également pour objet un module d'échange thermique 100, comprenant au moins un dispositif de ventilation 1 et au moins un échangeur thermique 101, comme il sera détaillé ultérieurement.

Comme il ressort des figures, le dispositif de ventilation 1 comprend au moins un ventilateur tangentiel, aussi nommé turbomachine tangentielle ci-après, référencée 2, pour mettre en mouvement un flux d'air F à destination de l'échangeur de chaleur ou des échangeurs de chaleur. En effet, le dispositif de ventilation peut alimenter en air l'échangeur de chaleur 101 mais aussi plusieurs échangeurs de chaleur disposés l'un derrière l'autre, ou l'un à côté de l'autre.

Le dispositif de ventilation 1 comprend également un moyen de guidage 3 de l'air F jusque dans chacun des échangeurs de chaleur à refroidir.

### Premier mode de réalisation

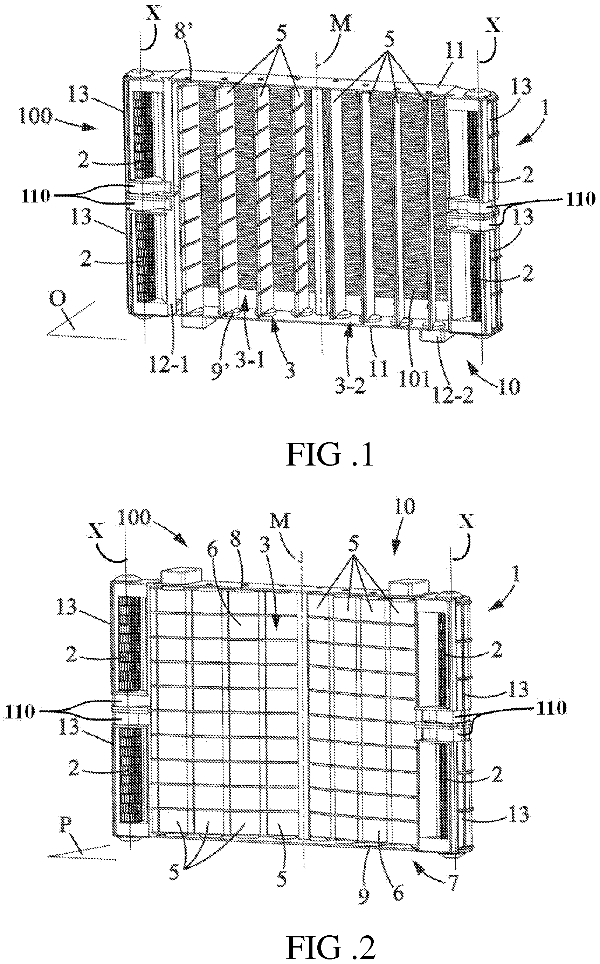

Selon le premier mode de réalisation, illustré sur les figures 1 à 8, le dispositif de ventilation 1 comprend un unique moyen de guidage 3 pour guider l'air à travers au moins un échangeur de chaleur 101.

Le moyen de guidage 3 comprend un ensemble d'une pluralité d'éléments de guidage 5.

Comme il ressort particulièrement des figures 1 à 4, chaque élément de guidage 5 comprend une surface de guidage d'air 6 de la forme d'un panneau et un axe de pivotement 7 de l'élément de guidage 5.

Le panneau 6 présente une forme sensiblement rectangulaire.

L'axe de pivotement 7 comprend deux doigts 8, 9, alignés, chacun des doigts 8, 9 faisant saillie hors du panneau 6 dans une direction longitudinale du panneau 6.

Les éléments de guidage 5 sont montés parallèlement les uns aux autres, et parallèlement à une direction médiane dite de pivotement, notée M.

Comme il ressort également des figures 1 et 2, le dispositif de ventilation 1 comprend un cadre 10.

Le cadre 10 présente une forme sensiblement rectangulaire.

Le cadre 10 comprend deux barres 11 de support respectivement des doigts 8 et des doigts 9 des éléments de guidage 5.

Les barres 11 s'étendent parallèlement l'une à l'autre et orthogonalement à la direction M.

Les barres 11 forment longueurs du rectangle 10.

Le cadre 10 comprend également deux barres 12-1, 12-2 de soutien de compartiments 13.

Les barres 12-1, 12-2 s'étendent parallèlement l'une à l'autre, et parallèlement à la direction M.

Les barres 12-1, 12-2 forment largeurs du rectangle 10.

Comme visible sur les figures 1 et 2, chaque barre 12-1, 12-2 supporte deux compartiments 13 s'étendant dans le prolongement l'un de l'autre.

Chaque compartiment 13 est configuré pour loger une turbomachine tangentielle 2, ou tout au moins la turbine tangentielle de la turbomachine, le moteur d'entrainement de la turbine pouvant être commun avec une turbine d'un compartiment adjacent.

On peut définir deux parties du moyen de guidage 3.

Une première partie 3-1 comprend les éléments de guidage 5 disposés entre la première barre 12-1 et la direction médiane de pivotement M et une deuxième partie 3-2 comprend les éléments de guidage 5 disposés entre la deuxième barre 12-2 et la direction médiane de pivotement M.

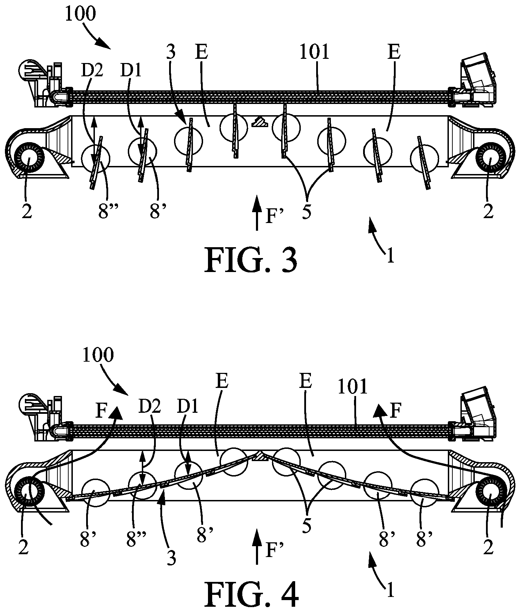

Comme plus particulièrement visible sur les figures 3 et 4, les doigts 8 (respectivement 9) ne sont pas alignés.

Leurs projections 8' (respectivement 9') dans un plan, noté O, orthogonal à l'axe M, forment un V.

Le plan O coïncide sensiblement avec le plan formé par la barre de support 11.

En d'autres termes, les éléments de guidage sont positionnés entre les barres de support 11 pour qu'une distance D1 entre l'échangeur de chaleur 101 et une projection donnée 8' (9') soit inférieure à une distance D2 entre l'échangeur de chaleur 101 et la projection adjacente 8", située dans la même moitié de section 3-1 en étant plus proche de la turbomachine tangentielle associée.

Cette configuration assure un guidage optimal de l'air puisque le flux d'air converge depuis la turbomachine tangentielle 2 jusque dans l'échangeur de chaleur 101.

Néanmoins, selon une autre variante, les projections peuvent être alignées le long des barres 11.

Cette variante, moins avantageuse pour l'écoulement d'air, permet éventuellement de simplifier le procédé de fabrication du dispositif de ventilation 1.

Le cadre 10 délimite un espace interne formant l'entrée d'air à destination de l'échangeur de chaleur 101. Au sein de cet espace interne, les éléments de guidage délimitent des passages d'air E vers l'échangeur de chaleur 101.

Les éléments de guidage sont montés mobiles entre une position d'ouverture du passage d'air E et une position d'obturation au moins partielle du passage d'air E.

En position d'ouverture, les panneaux sont espacés les uns des autres de sorte à laisser passer un flux d'air F' extérieur au module d'échange vers l'échangeur de chaleur 101.

En position d'obturation, autrement appelée position de fermeture, les panneaux 6 s'étendent dans le prolongement les uns des autres de sorte à empêcher au flux d'air F' de traverser l'échangeur de chaleur 101.

Dans cette position, les panneaux 6 sont avantageusement jointifs les uns des autres grâce à une lèvre disposée le long de leur bord.

Selon une autre position intermédiaire possible (non représentée sur les figures), les éléments de guidage obturent partiellement le passage d'air E, ce qui permet de réduire le débit d'air vers l'échangeur de chaleur 101, par exemple lorsque les besoins de refroidissement de l'échangeur de chaleur 101 ne sont pas élevés.

Comme visible sur les figures 1 et 2, le dispositif de ventilation 1 comprend au moins :
- un premier et un deuxième ventilateur tangentiel 2 (qui peut être aussi nommé « turbomachine tangentielle » comme précédemment) de mise en mouvement d'un flux d'air F destiné à traverser l'au moins un échangeur de chaleur 101, les au moins deux ventilateurs étant agencés de sorte à être alignés l'un par rapport à l'autre dans le dispositif de ventilation 1 le long de leur axe de rotation X, et
- un premier moteur d'entrainement 110 des premier et deuxième ventilateurs tangentiels 2, le premier moteur d'entrainement étant configuré pour être logé entre les premier et deuxième ventilateurs tangentiels 2.

De cette manière, le positionnement du moteur d'entrainement entre les ventilateurs tangentiels évite que le compartiment moteur ne dépasse du dispositif de ventilation 1, ce qui permet d'améliorer l'intégration du moteur, de gagner en compacité et protège le moteur d'impact extérieur, améliorant la fiabilité générale du dispositif de ventilation 1.

Dans l'exemple de réalisation illustré aux figures 1 et 2, le dispositif de ventilation comporte au moins deux moteurs d'entrainement 110. Le premier moteur d'entrainement 110 est accouplé avec le premier ventilateur tangentiel 2 et le deuxième moteur d'entrainement 110 est accouplé avec le deuxième ventilateur tangentiel 2, le deuxième moteur d'entrainement 110 étant juxtaposé au premier moteur d'entrainement entre les premier et deuxième ventilateurs tangentiels 2.

Dans cet exemple, les premier et un deuxième ventilateurs tangentiels 2 sont agencés verticalement l'un par rapport à l'autre, de sorte à être juxtaposés l'un au-dessus de l'autre.

Selon un mode de réalisation possible, le dispositif de ventilation comprend en outre au moins un troisième et un quatrième ventilateur tangentiel agencés de sorte à être alignés l'un par rapport à l'autre dans le dispositif de ventilation 1 le long de leur axe de rotation X. Les premier et deuxième ventilateurs tangentiels 2 se situent le long d'un côté du dispositif de ventilation 1 qui est opposé au côté le long duquel les troisième et quatrième ventilateurs tangentiels 2, les premier, deuxième, troisième et quatrième ventilateurs tangentiels 2 s'étendant respectivement parallèlement aux éléments de guidage 5.

Comme visible sur la figure 3, en position d'ouverture, le flux F', extérieur au véhicule traverse le dispositif de ventilation 1 jusque dans l'échangeur de chaleur 101.

Les turbomachines 2 sont préférentiellement à l'arrêt.

Comme visible sur la figure 4, en position de fermeture les panneaux 6 bloquent le passage d'air E au flux d'air F'.

Les turbomachines fonctionnent alors et soufflent le flux d'air F qui est alors guidé par les éléments de guidage 5 jusque dans l'échangeur de chaleur 101.

Du fait de la forme convergente du moyen de guidage 3, l'air est acheminé de manière optimale à l'échangeur de chaleur 101.

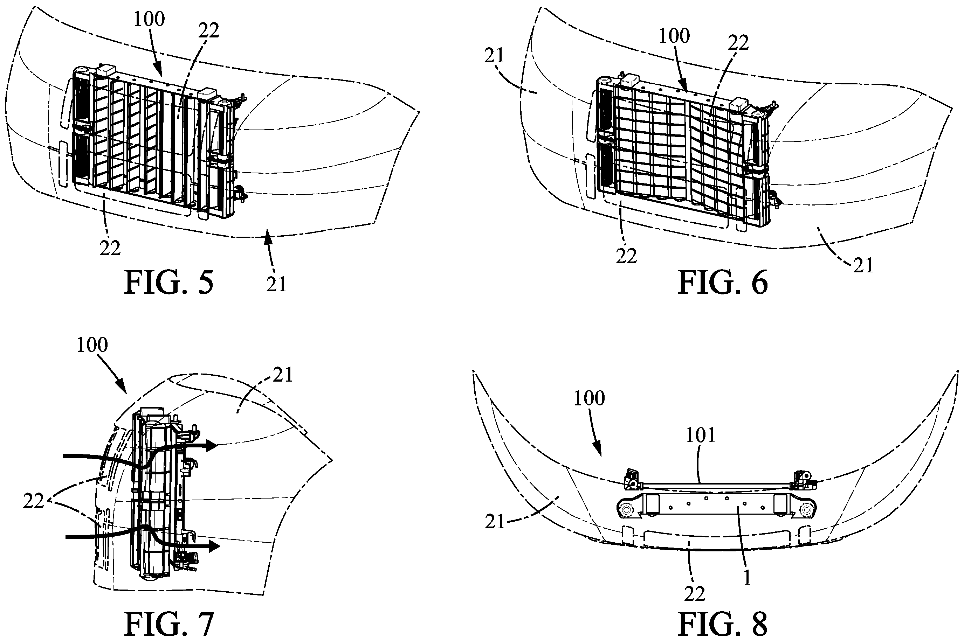

Les figures 5 à 8 illustrent un exemple d'intégration du dispositif de ventilation 1 dans une face avant 20 de véhicule automobile.

Comme visible sur ces figures, une calandre 21 est munie de deux orifices 22, formant ouverture d'entrée de l'air F'.

Le dispositif de ventilation 1 est positionné derrière les orifices 22.

Sur ces figures, le dispositif de ventilation 1 est conforme au dispositif de ventilation 1 déjà décrit en relation avec les figures 1 à 4.

### Variante de réalisation de l'invention

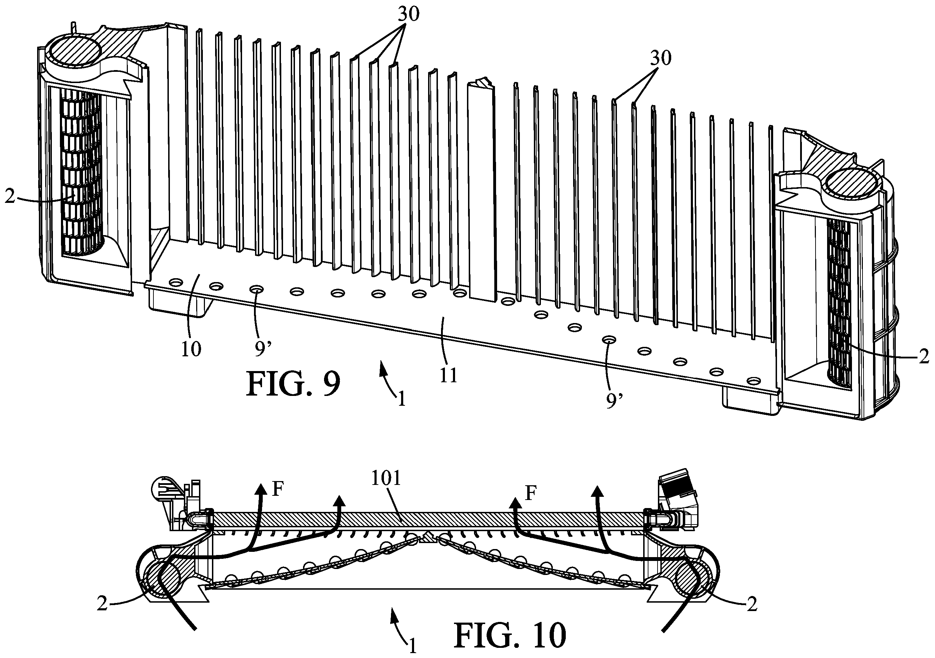

Selon la variante des figures 9 et 10, le dispositif de ventilation 1 comprend un moyen de guidage 3 tel qu'illustré sur les figures 1 à 4 (non représenté sur les figures 9 et 10 pour des raisons de clarté, ces dernières étant une vue partielle du module de la figure 1), un cadre 10, des turbomachines tangentielles 2 dans une configuration semblable à celle du premier mode de réalisation.

Le dispositif de ventilation 1 comprend en sus au moins un déflecteur entre le moyen de guidage 3 (non représenté) et l'échangeur de chaleur 101.

Le ou les déflecteurs assurent une meilleure répartition de l'air sur l'échangeur de chaleur 101, permettant une distribution plus homogène du flux d'air F dans l'échangeur de chaleur 101.

Sur les figures 9 et 10, le dispositif de ventilation 1 comprend une pluralité de déflecteurs 30.

Chaque déflecteur 30 est une tige dont une section transversale est courbée de sorte à guider l'air.

Les déflecteurs 30 sont alignés le long des barres de support 11, de préférence à équidistance les uns des autres, comme plus particulièrement visible sur la figure 10.

En position d'ouverture, l'air F soufflé par les turbomachines 2 est guidé vers l'échangeur 101 par le moyen de guidage 3 puis par les déflecteurs 30.

On note que le dispositif 1 selon cette variante de réalisation permet de mieux homogénéiser l'air à destination des échangeurs de chaleur 101 par l'intermédiaire des déflecteurs.

On note également que sur la figure 9 on a représenté une pluralité d'orifices 31, chaque orifice 31 étant destiné à recevoir un doigt 9' des éléments de guidage 5.

### Deuxième mode de réalisation

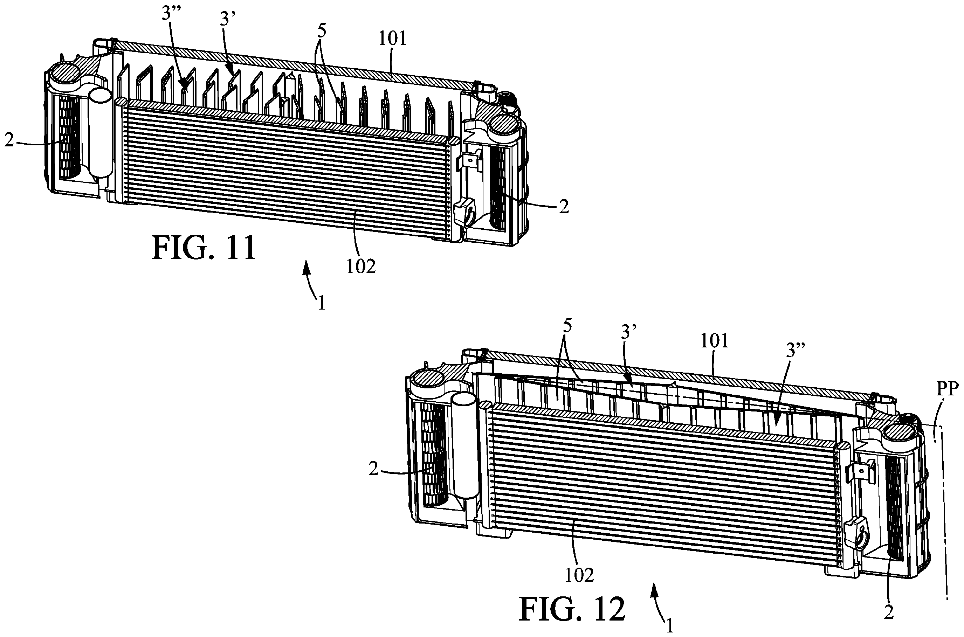

Selon le deuxième mode de réalisation illustré aux figures 11 et 12, le dispositif de ventilation 1 comprend deux moyens de guidage 3', 3".

Le premier moyen de guidage 3' permet de diriger l'air sur un premier échangeur de chaleur 101, tandis que le deuxième moyen de guidage 3" permet de diriger l'air vers un deuxième échangeur de chaleur 102.

Comme il ressort des figures 11 et 12, le dispositif de ventilation 1 est disposé entre les deux échangeurs 101, 102 s'étendant parallèlement.

Chacun des moyens de guidage 3', 3" comprend des éléments de guidage identiques à ceux décrits en relation avec le premier mode de réalisation.

Comme il ressort des figures 11 et 12, les axes de pivotement 7 des deux moyens de guidage 3 s'étendent parallèlement à la direction médiane de pivotement M.

L'ensemble des deux moyens de guidage 3', 3" présente une symétrie par rapport à un plan PP.

Le plan PP comprend une direction parallèle à la direction médiane M.

Le dispositif 1 est par ailleurs identique à celui décrit en relation avec le premier mode de réalisation.

Comme visible sur les figures 11 et 12, les deux moyens de guidage 3', 3" sont alimentés par les mêmes turbomachines 2.

On note que le dispositif 1 selon ce deuxième mode de réalisation peut aussi comprendre avantageusement des déflecteurs 30 (non représentées sur les figures 11 et 12) entre chacun des moyens de guidage 3' et 3" et respectivement les premier et deuxième échangeurs 101, 102 pour mieux homogénéiser l'air à destination des échangeurs de chaleur 101 et 102.

### Troisième mode de réalisation

Selon un troisième mode de réalisation, le dispositif de ventilation 1 comprend un seul moyen de guidage 3 comprenant un unique élément de guidage 5.

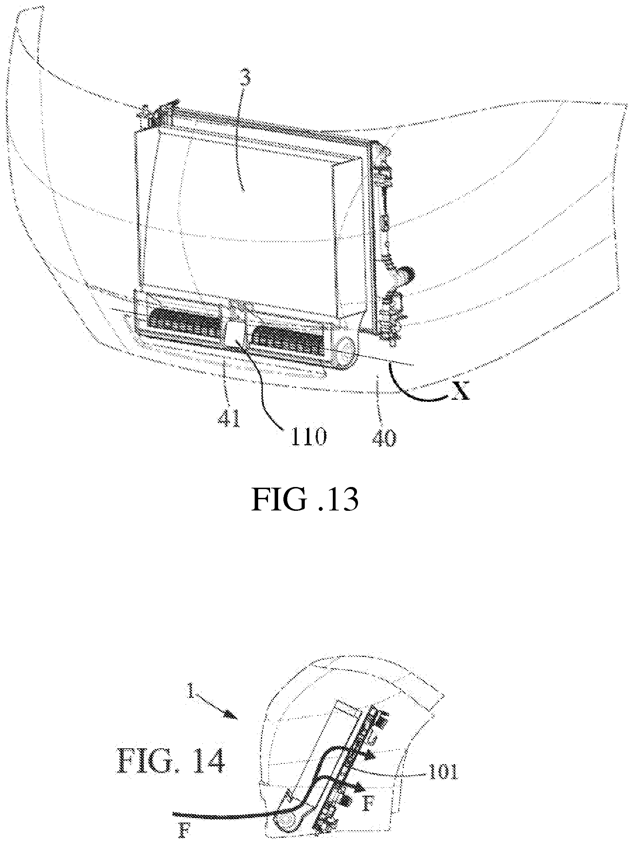

Comme visible sur les figures 13 et 14, l'élément de guidage 5 se présente sous la forme d'un capot.

Le dispositif de ventilation illustré 1 comprend également au moins une turbomachine tangentielle, voire deux turbomachines tangentielles comme représenté sur la figure 13, s'étendant dans le prolongement l'une de l'autre.

Ce mode de réalisation est particulièrement avantageux pour un véhicule électrique.

Dans ce cas, comme il ressort de la figure 13, une calandre 40 est percée d'un orifice 41 formant ouverture d'air.

Les deux turbomachines 2 sont disposées juste derrière l'orifice 41 de sorte que l'orifice 41 forme l'unique entrée d'air du dispositif de ventilation 1.

Avantageusement, les deux turbomachines 2 occupent tout le volume de l'entrée d'air de la calandre.

On note que le dispositif 1 selon ce troisième mode de réalisation peut également comprendre avantageusement des déflecteurs 30 (non représentés sur les figures 13 et 14) pour mieux homogénéiser l'air à destination de l'échangeur de chaleur 101.

Selon une variante non illustrée, l'au moins une turbomachine tangentielle 2 est positionnée à distance de l'entrée d'air 41.

Dans ce cas, une pièce supplémentaire permet d'emmener l'air depuis l'orifice 41 jusqu'au(x) turbomachine(s) 2.

On peut avantageusement munir l'une au moins des entrées d'air 41 d'au moins un volet mobile entre une position d'ouverture de l'entrée et une position de fermeture au moins partielle de l'entrée.

Comme visible sur la figure 13, les premier et un deuxième ventilateurs tangentiels 2 peuvent être agencés horizontalement, juxtaposés l'un à côté de l'autre, les au moins deux ventilateurs étant agencés de sorte à être alignés l'un par rapport à l'autre dans le dispositif de ventilation 1 le long de leur axe de rotation X.

Dans ce mode de réalisation illustré à la figure 13, le premier moteur d'entrainement est commun au deux ventilateurs tangentiels 2 de sorte à entrainer simultanément le premier et le deuxième ventilateur tangentiel 2.

### Module d'échange

L'invention a également pour objet un module d'échange de chaleur 100 pour véhicule automobile comprenant le dispositif de ventilation 1 et au moins un échangeur de chaleur 101, le dispositif de ventilation et l'échangeur de chaleur étant positionnés l'un relativement à l'autre de sorte qu'un flux d'air mis en mouvement par le dispositif de ventilation alimente en air l'échangeur de chaleur, comme il ressort déjà de la description qui précède.

Selon une variante de réalisation du module, le dispositif de ventilation 1 est positionné de sorte qu'un flux d'air F mis en mouvement par le dispositif de ventilation alimente le premier échangeur de chaleur 101 et le deuxième échangeur de chaleur 102.

Le dispositif de ventilation 1 peut notamment être positionné entre le premier échangeur de chaleur 101 et le deuxième échangeur de chaleur 102 de sorte à alimenter chacun des échangeurs 101, 102 en air frais.

L'invention n'est pas limitée aux exemples de réalisation présentés et d'autres modes de réalisation apparaîtront clairement à l'homme du métier. Notamment, les différents exemples peuvent être combinés, tant qu'ils ne sont pas contradictoires à l'objet des revendications.

Par ailleurs, les modes de réalisation représentés sur les figures illustrent des éléments de guidages d'air verticaux avec une turbomachine tangentielle montée latéralement. Toutefois, d'autres configurations de dispositif de ventilation peuvent être envisagées, telles qu'une réalisation selon laquelle les éléments de guidage d'air sont horizontaux, la ou les turbomachines étant alors positionnées en-dessous et/ou au-dessus des éléments de guidages.

En outre, le dispositif de ventilation peut être intégré aussi bien dans véhicule électrique qu'un véhicule thermique ou hybride. De cette manière on comprendra que les échangeurs refroidis par le dispositif de ventilation décrit précédemment peuvent être tout type d'échangeur de chaleur de véhicule automobile, tels qu'un échangeur de chaleur haute température et/ou basse température, un condenseur, un échangeur pour le refroidissement d'air de suralimentation, etc. Le module d'échange de chaleur peut de la même manière comporter n'importe quel échangeur de chaleur de ce type.

## Revendications

1. Dispositif de ventilation (1) destiné à générer un flux d'air à travers au moins un échangeur de chaleur (101) de véhicule automobile, comprenant au moins un premier et un deuxième ventilateur tangentiel (2) de mise en mouvement d'un flux d'air (F) destiné à traverser l'au moins un échangeur de chaleur (101), les au moins deux ventilateurs étant agencés de sorte à être alignés l'un par rapport à l'autre dans le dispositif de ventilation (1) le long de leur axe de rotation (X), ledit dispositif étant tel qu'il comprend également un premier moteur d'entrainement (110) des premier et deuxième ventilateurs tangentiels (2), et **caractérisé en ce que** le premier moteur d'entrainement étant configuré pour être logé entre les premier et deuxième ventilateurs tangentiels (2).

2. Dispositif selon la revendication précédente, dans lequel le premier moteur d'entrainement est commun au deux ventilateurs tangentiels (2) de sorte à entrainer simultanément le premier et le deuxième ventilateur tangentiel (2).

3. Dispositif selon la revendication 1, dans lequel le moteur d'entrainement (110), dit premier moteur d'entrainement, est accouplé avec le premier ventilateur tangentiel (2), et un deuxième moteur d'entrainement (110) est accouplé avec le deuxième ventilateur tangentiel (2), le deuxième moteur d'entrainement (110) étant juxtaposé au premier moteur d'entrainement entre les premier et deuxième ventilateurs tangentiels (2).

4. Dispositif selon l'une quelconque des revendications précédentes, comprenant en outre au moins un moyen de guidage (3) comprenant au moins un élément (5) de guidage de l'air conformé pour guider l'air mis en mouvement par la ventilateur tangentiel (2) à travers l'échangeur de chaleur (101).

5. Dispositif selon la revendication précédente, dans lequel les éléments de guidage d'air (5) sont conformés pour délimiter au moins un passage d'air (E) entre les premier et deuxième ventilateurs tangentiels (2) et l'échangeur de chaleur (101) et sont montés mobiles entre une position d'ouverture dudit au moins un passage d'air (E) et une position d'obturation (E) au moins partielle dudit au moins un passage d'air.

6. Dispositif selon la revendication précédente, dans lequel chaque élément de guidage d'air (5) comprend une surface de guidage d'air (6) et un axe de pivotement (7) de l'élément de guidage (5).

7. Dispositif selon la revendication précédente, dans lequel les axes de pivotement (7) s'étendent parallèlement les uns aux autres, des projections (8', 9') de chaque axe de pivotement (7) dans un plan (O) orthogonal aux axes de pivotement (7) étant appelées projection (8', 9').

8. Dispositif selon la revendication précédente, dans lequel les projections (8', 9') sont alignées dans ledit plan (O) orthogonal aux axes de pivotement (7).

9. Dispositif selon l'une quelconque des 4 à 8, comprenant en outre au moins un troisième et un quatrième ventilateur tangentiel (2) agencés de sorte à être alignés l'un par rapport à l'autre dans le dispositif de ventilation (1) le long de leur axe de rotation (X),
et dans lequel les premier et deuxième ventilateurs tangentiels (2) se situent le long d'un côté du dispositif qui est opposé au côté le long duquel les troisième et quatrième ventilateurs tangentiels (2), les premier, deuxième, troisième et quatrième ventilateurs tangentiels (2) s'étendant respectivement parallèlement aux éléments de guidage (5).

10. Module d'échange thermique, comprenant un dispositif de ventilation (1) selon l'une des revendications précédentes et au moins un premier échangeur de chaleur (101), le premier échangeur de chaleur (101) et le dispositif de ventilation (1) étant positionnés l'un relativement à l'autre de sorte qu'un flux d'air (F) mis en mouvement par le dispositif de ventilation (1) alimente l'échangeur de chaleur (101).

## Patentansprüche

1. Belüftungsvorrichtung (1), welche dazu bestimmt ist, einen Luftstrom durch mindestens einen Wärmetauscher (101) eines Kraftfahrzeugs zu erzeugen, und mindestens einen ersten und einen zweiten Querstromlüfter (2) zur Bewegung eines Luftstroms (F), der dazu bestimmt ist, den mindestens einen Wärmetauscher (101) zu durchqueren, umfasst, wobei die mindestens zwei Lüfter so angeordnet sind, dass sie in der Belüftungsvorrichtung (1) entlang ihrer Drehachse (X) zueinander ausgerichtet sind, wobei die Vorrichtung so beschaffen ist, dass sie außerdem einen ersten Antriebsmotor (110) des ersten und des zweiten Querstromlüfters (2) umfasst, und **dadurch gekennzeichnet ist, dass** der erste Antriebsmotor dafür ausgelegt ist, zwischen dem ersten und dem zweiten Querstromlüfter (2) untergebracht zu werden.

2. Vorrichtung nach dem vorhergehenden Anspruch, wobei der erste Antriebsmotor den beiden Querstromlüftern (2) gemeinsam ist, so dass er gleichzeitig den ersten und den zweiten Querstromlüfter (2) antreibt.

3. Vorrichtung nach Anspruch 1, wobei der Antriebsmotor (110), erster Antriebsmotor genannt, mit dem ersten Querstromlüfter (2) gekoppelt ist und ein zweiter Antriebsmotor (110) mit dem zweiten Querstromlüfter (2) gekoppelt ist, wobei der zweite Antriebsmotor (110) neben dem ersten Antriebsmotor zwischen dem ersten und dem zweiten Querstromlüfter (2) angeordnet ist.

4. Vorrichtung nach einem der vorhergehenden Ansprüche, welche außerdem mindestens ein Leitmittel (3) umfasst, das mindestens ein Luftleitelement (5) umfasst, das dafür ausgebildet ist, die von dem Querstromlüfter (2) in Bewegung versetzte Luft durch den Wärmetauscher (101) zu leiten.

5. Vorrichtung nach dem vorhergehenden Anspruch, wobei die Luftleitelemente (5) dafür ausgebildet sind, mindestens einen Luftdurchlass (E) zwischen dem ersten und dem zweiten Querstromlüfter (2) und dem Wärmetauscher (101) zu begrenzen, und zwischen einer Position der Öffnung des mindestens einen Luftdurchlasses (E) und einer Position (E) des wenigstens teilweisen Verschlusses des mindestens einen Luftdurchlasses beweglich angebracht sind.

6. Vorrichtung nach dem vorhergehenden Anspruch, wobei jedes Luftleitelement (5) eine Luftleitfläche (6) und eine Schwenkachse (7) des Luftleitelements (5) umfasst.

7. Vorrichtung nach dem vorhergehenden Anspruch, wobei sich die Schwenkachsen (7) parallel zueinander erstrecken, wobei Projektionen (8', 9') jeder Schwenkachse (7) in einer zu den Schwenkachsen (7) orthogonalen Ebene (O) Projektion (8', 9') genannt werden.

8. Vorrichtung nach dem vorhergehenden Anspruch, wobei die Projektionen (8', 9') in der zu den Schwenkachsen (7) orthogonalen Ebene (O) ausgerichtet sind.

9. Vorrichtung nach einem der Ansprüche 4 bis 8, welche außerdem mindestens einen dritten und einen vierten Querstromlüfter (2) umfasst, die so angeordnet sind, dass sie in der Belüftungsvorrichtung (1) entlang ihrer Drehachse (X) zueinander ausgerichtet sind,
und wobei der erste und der zweite Querstromlüfter (2) sich entlang einer Seite der Vorrichtung befinden, die der Seite gegenüberliegt, entlang der sich der dritte und der vierte Querstromlüfter (2), wobei sich der erste, zweite, dritte und vierte Querstromlüfter (2) jeweils parallel zu den Luftleitelementen (5) erstrecken.

10. Wärmetauschmodul, welches eine Belüftungsvorrichtung (1) nach einem der vorhergehenden Ansprüche und mindestens einen ersten Wärmetauscher (101) umfasst, wobei der erste Wärmetauscher (101) und die Belüftungsvorrichtung (1) relativ zueinander so positioniert sind, dass ein Luftstrom (F), der von der Belüftungsvorrichtung (1) in Bewegung versetzt wird, den Wärmetauscher (101) speist.

## Claims

1. Ventilation device (1) intended to generate an air flow through at least one motor-vehicle heat exchanger (101), comprising at least a first and a second tangential fan (2) for moving an air flow (F) intended to traverse the at least one heat exchanger (101), the at least two fans being arranged such as to be aligned with one another in the ventilation device (1) along their axis of rotation (X), said device being such that it also comprises a first driving motor (110) for the first and second tangential fans (2), and **characterized in that** the first driving motor is designed to be seated between the first and second tangential fans (2).

2. Device according to the preceding claim, wherein the first driving motor is common to both tangential fans (2) such as to simultaneously drive the first and second tangential fans (2).

3. Device according to Claim 1, wherein the driving motor (110), referred to as the first driving motor, is coupled to the first tangential fan (2), and a second driving motor (110) is coupled to the second tangential fan (2), the second driving motor (110) being juxtaposed with the first driving motor between the first and second tangential fans (2).

4. Device according to any one of the preceding claims, further comprising at least one guide means (3) comprising at least one air guiding element (5) shaped to guide the air set in motion by the tangential fan (2) through the heat exchanger (101).

5. Device according to the preceding claim, wherein the air guiding elements (5) are shaped to delimit at least one air passage (E) between the first and second tangential fans (2) and the heat exchanger (101) and are mounted moveably between a position in which said at least one air passage (E) is open and a position (E) in which said at least one air passage is at least partially closed.

6. Device according to the preceding claim, wherein each air guiding element (5) comprises an air guiding surface (6) and a pivot axle (7) for the guiding element (5) .

7. Device according to the preceding claim, wherein the pivot axles (7) extend parallel to one another, projections (8', 9') of each pivot axle (7) in a plane (0) orthogonal to the pivot axles (7) being referred to as projections (8', 9').

8. Device according to the preceding claim, wherein the projections (8', 9') are aligned in said plane (O) orthogonal to the pivot axles (7).

9. Device according to any one of Claims 4 to 8, further comprising at least a third and a fourth tangential fan (2) arranged such as to be aligned with one another in the ventilation device (1) along their axis of rotation (X),
and wherein the first and second tangential fans (2) are positioned along one side of the device that is opposite to the side along which the third and fourth tangential fans (2), the first, second, third and fourth tangential fans (2) extending respectively parallel to the guiding elements (5).

10. Heat exchange module, comprising a ventilation device (1) according to one of the preceding claims and at least a first heat exchanger (101), the first heat exchanger (101) and the ventilation device (1) being positioned relative to one another in such a way that an air flow (F) set in motion by the ventilation device (1) feeds the heat exchanger (101).
